# EUROPÄISCHE PATENTANMELDUNG

(11) **EP 1 287 742 A1**
(43) Veröffentlichungstag der Anmeldung: **05.03.2003**
(21) Anmeldenummer: 02019255.5
(22) Anmeldetag: 28.08.2002
(51) Int. Cl.: A01N 65/00

(54) **Verfahren zur Herstellung eines Mittels zur Prophylaxe und/oder Bekämpfung zumindest eines Pflanzenschädlings**

(30) Priorität: 30.08.2001 AT 13822001
(71) Anmelder: Zorn, Andrea, 4542 Nussbach (AT)
(72) Erfinder: Zorn, Andrea, 4542 Nussbach (AT)
(74) Vertreter: Secklehner, Günter, Dr.

(57) **Zusammenfassung**

Die Erfindung betrifft ein Verfahren zur Herstellung eines Mittels zur Prophylaxe und/oder Bekämpfung von zumindest einem Pflanzenschädling durch Zusammengeben mehrerer Komponenten. Das Mittel aus den Komponenten, jeweils in Gew.-%, 2 % bis 15 % der Blätter einer Thuja occidentalis (Cupressaceae) und 0,1 % bis 10 % der Rinde einer Populus tremuloides (Salicaceae), wird unter Zugabe eines Lösungsmittels, wobei dieses den Rest auf 100 Gew.-% bildet, hergestellt.

## Beschreibung

Die Erfindung betrifft ein Verfahren zur Herstellung eines Mittels zur Prophylaxe und/oder Bekämpfung von zumindest einem Pflanzenschädling und ein Mittel entsprechend den Merkmalen in den Oberbegriffen der Ansprüche 1 und 13, sowie die Verwendung des Mittels entsprechend dem Anspruch 16.

Die Pflanzenkrankheit Feuerbrand wird durch das stäbchenförmige Bakterium Erwinia amylovora verursacht. Dieses stammt ursprünglich aus Nordamerika, wobei die ersten europäischen Nachweise aus dem Jahr 1957 vorliegen. Mittlerweile gibt es weltweit 34 offiziell registrierte Befallsländer. Erwinia amylovora stellt sowohl für den Erwerbsobstbau als auch für öffentliche Grünflächen und die Hausgärten ein bedeutsames Problem dar. Die Krankheit der Pflanzen ist meldepflichtig, d.h. ihr Auftreten oder auch nur der Verdacht ist in einem bisher als vom Feuerbrand frei eingestuften Gebiet der zuständigen Behörde zu melden. Erwinia amylovora kommt aus pflanzensystematischer Betrachtungsweise vor allem bei den sogenannten apfelfrüchtigen Rosengewächsen (Pomoideae) vor. Anzuführen sind hier die einzelnen Arten der Gattung Malus (Apfel), Pyrus (Birne), Pyracantha (Feuerdorn), Cydonia (Quitte), Stranvaesia (Stranvaesie), Sorbus (Mehlbeere), Crataegus (Weiß- und Rotdorn), Choenomeles (Zierquitte), Cotoneaster (Felsenmispel). Als Wirtspflanze können aber auch andere Rosengewächse (Rosaceae) wie z.B. Sorbus aucuparia (Eberesche) dienen. Nicht befallen werden Stein- und Beerenobst, Wal- und Haselnüsse, andere Laubgehölze sowie die verschiedenen Koniferen.

Die durch die Feuerbrandbakterien geschädigten Pflanzenteile (Blüten, Blätter, Triebe) sehen wie vom Feuer verbrannt aus. Befallene Blüten und Blätter welken und verfärben sich dunkelbraun bis schwarz, sterben ab und trocknen ein. Charakteristisch ist, insbesondere bei Kernobst, die zu Beginn auftretende Schwärzung der Haupt- und Nebenadern der Blätter und die später U-förmige bis krückstockartige Krümmung der Triebspitze. Unter feucht warmen Bedingungen treten aus den Befallsstellen milchig-weiße, später rotbraune bis gelbbraune Schleimtropfen (= Bakterienschleim) aus. Die befallenen Blätter, Blüten und jungen Früchte bleiben häufig bis in den Winter am Baum hängen. Betroffene Rindenpartien reißen häufig ein und sind rötlich oder braun verfärbt. Die Symptomausprägung ist von vielen Faktoren abhängig, d.h. es müssen im Einzelfall nicht alle genannten Symptome vorliegen. Eine genau Diagnose ist nur im Laufe der Vegetationszeit mit Hilfe spezieller Nachweisverfahren in Labors möglich.

Die Überdauerung der Bakterien während der Wintermonate erfolgt in erster Linie an den erkrankten Rindenteilen betroffener Pflanzen. Im Frühjahr nehmen die Bakterien mit steigenden Temperaturen ihre Vermehrung wieder auf. In Verbindung mit Feuchtigkeit treten sie als Bakterienschleim nach außen, der dann über Regenspritzer, Wind und diverse Insekten, Bienen, Hummeln, Ameisen etc., verbreitet wird. Als erste Befallsstellen sind die geöffneten Blüten zu nennen. Die Infektion erfolgt, insbesondere bei feuchtwarmer Witterung (über 18 °C, über 70 % relative Luftfeuchtigkeit), beispielsweise über kleine Verletzungen, die Nektarien am Blütenboden oder über Spaltöffnungen der Kelchblätter. Da sowohl die Polenkörner als auch der Nektar stark von den Bakterien besiedelt werden, können bereits zu einem frühen Zeitpunkt alle blütenbesuchenden Insekten den Feuerbrand von Blüte zu Blüte tragen. Die ersten Befallssymptome an den Blüten treten etwa zwei bis vier Wochen nach der Infektion auf. Im weiteren Verlauf werden dann Laubblätter, junge Triebe als auch die Nachblüten befallen. Innerhalb der Pflanze bleiben die Bakterien mehrheitlich auf ihren Infektionsort und dessen nähere Umgebung begrenzt (Blatt, Blüten, Stängelabschnitt), können jedoch über das pflanzliche Gefäßsystem auch weiter entfernt gelegene Stellen erreichen. Eine weitere Verbreitung erfolgt durch Schnittwerkzeuge, als auch großflächig betrachtet durch den Handel mit befallenen Pflanzen bzw. Pflanzenteilen und verseuchtem Verpackungsmaterial. Auch Zugvögel, wie Drossel oder Star, sind in diesem Zusammenhang anzuführen. Der Ausgang einer bedrohlichen Epidemie findet sich häufig bei hochanfälligen Pflanzen, die z.B. als Windschutzhecken verbreitet sind (Weißdorn) oder häufig in Kleingärten bzw. auf öffentlichen Grünflächen Verwendung finden (großblättrige Cotoneasterarten).

Im Rahmen der Feuerbrandbekämpfung stehen zur Zeit präventive Maßnahmen im Vordergrund. Es gilt hierbei, das Triebwachstum der Bäume in der Weise zu kontrollieren, daß es nur in mäßiger Weise erfolgt und ein frühzeitiger Triebabschluß gefördert wird. Entsprechend sind bei der Standortwahl gut drainierte Böden zu bevorzugen, da hier das Triebwachstum rasch zum Abschluß kommt. Auch eine überhöhte Düngung, insbesondere in bezug auf Stickstoff, würde den Triebabschluß verzögern und ist somit nicht wünschenswert.

Erkannte Infektionsstellen, z.B. betroffene Äste, sind bis zu 50 cm unter der sichtbaren Befallsstelle abzuschneiden und mit einem Wundpflegemittel zu verstreichen. Die verwendeten Schnittwerkzeuge sind hierbei regelmäßig, mit z.B. 70%igem Alkohol, zu desinfizieren. Nach einer unter Umständen erforderlichen Rodung stark infizierter Bäume ist zu bedenken, daß der Erreger noch einige Zeit am infizierten Wurzelmaterial lebensfähig bleibt. Aus diesem Grund soll eine Neupflanzung nach einer Überwinterung bei Rodung im Herbst oder nach einem mindestens vierwöchigen, besser jedoch mehrmonatigen Sicherheitsabstand bei Rodung im Frühjahr erfolgt. Die gerodeten Bäume als auch die anfallenden Schnittgutreste befallener Bäume sind aus Sicht des Pflanzenschutzes am effektivsten zu verbrennen. Der Nachteil, der in der mechanischen Entfernung von befallenem Material zu sehen ist, ist, daß die Bakterien über das pflanzliche Gefäßsystem auch weiter entfernt gelegene Stellen erreichen und somit eine lokale Behandlung nicht ausreichend ist und der Feuerbranderreger an anderen, noch nicht erkrankten Stellen der Pflanze weiterhin vorhanden ist. Weiters ist zu bedenken, daß durch das Verbrennen des infektiösen Materials eine hohe Umweltbelastung entsteht und daß weiters eine Neupflanzung erst nach einer längeren Zeitperiode erfolgen darf und somit ein Ertrags- und in weiterer Folge ein Erwerbsverlust eintritt.

Der Einsatz von Erwinia amylovora resistenten Sorten wäre eine äußerst sinnvolle Maßnahme gegen den Feuerbrand. Ausgehend von Kreuzungsversuchen nimmt man an, daß die Resistenz gegen Erwinia amylovora polygen vererbt wird, wobei eine dominante additive Genwirkung wahrscheinlich ist. Ziel der Resistenzzüchtung ist die Erzeugung von dauerhaft resistenten Sorten. Eine hohe Dauerhaftigkeit ist aber mit einzelnen Resistenzgenen kaum zu erreichen, da die Anpassung der Krankheitserreger die Erfolge der Züchtung oftmals zunichte macht. Um die Dauerhaftigkeit zu erhöhen, kann man Resistenzen pyramidisieren, worunter man die Erzeugung einer Pflanze mit mehreren funktionell verschiedenen Resistenzen versteht. Hier stellt sich das Problem der Erkennung der Resistenzen in den Nachkommenschaften der Züchtungsprogramme, da oftmals die dazu geeigneten Krankheitserreger noch nicht vorhanden sind.

Ansätze zum Resistenzmanagement werden auch mit gentechnisch veränderten krankheitsresistenten Sorten verfolgt, um einen raschen Resistenzdurchbruch zu verhindern. Da die Resistenz gegen Erwinia amylovora polygen vererbt wird und nur eine dominante, additive Genwirkung wahrscheinlich ist, ist es schwierig, eine absolut resistente Pflanze zu züchten. Zur Zeit gibt es auch noch viele ungeklärte Fragen bei gentechnisch manipulierten Pflanzen, wie z.B. die Vererbung auf die Nachkommen und die globalen Auswirkungen auf Tier und Mensch.

Als chemisches Mittel kann das Aminoglykosid-Antibiotikum Streptomycin eingesetzt werden. Der Erfolg des Antibiotikums zur Bekämpfung des Feuerbrandes ist relativ gut. Der Wirkungsgrad liegt im Durchschnitt bei 68 %. Nach einem Versuch, Streptomycin zur Bekämpfung des Feuerbrandes einzusetzen, wurden in 19 von 88 Honigproben Streptomycinrückstände gefunden. Durch die Nahrungsaufnahme von Streptomycin belasteten Nahrungsmitteln bzw. bereits durch das Ausbringen des Antibiotikums in den Obstgärten besteht die Gefahr, daß sich Streptomycin resistente Bakterien entwickeln. Die Resistenzen können auf andere Bakterienarten übertragen werden. Damit besteht die Gefahr, daß das Streptomycin in der Humanmedizin seine Wirkung gegen Tuberkulose und andere Infektionskrankheiten des Menschen verliert. Bei der Anwendung von Streptomycin beim Menschen ist eine sehr rasche Resistenzentwicklung der tuberkuloseverursachenden Bakterien beobachtet worden und eine hohe Ototoxizität und Nephrotoxizität bekannt.

Zur Bekämpfung des Feuerbrandes sind biologische Mittel unter dem Namen "Myco-sin" und "Biopro" der Firma Andermatt Biocontrol AG, Schweiz, bekannt.

"Myco-sin" enthält als wichtigste Komponenten schwefelsaure Tonerde und Schachtelhalmextrakte. Durch "Myco-sin" werden die Blüten geschützt und die Resistenzeigenschaften der Pflanze gestärkt. "Myco-sin" soll ab Blütebeginn regelmäßig und jeweils ein bis zwei Tage vor der potentiellen Infektion eingesetzt werden.

"Biopro" ist ein Antagonistenpräparat aus Bacillus subtilis. Jede aufgehende Blüte muß mit dem Antagonisten "Biopro" besetzt werden. Bacillus subtilis gilt als nicht pathogen und ist auch für andere Anwendungen in der Landwirtschaft bewilligt. Bacillus subtilis läßt sich bei Hornhautverletzungen des Auges durch Strohhalme gelegentlich als ursächlicher Keim eitriger Infekte nachweisen, womit deren Unbedenklichkeit in Frage gestellt sei.

"Myco-sin" und "Biopro" haben nur eine Teilwirkung gegen Feuerbrand. Beide Präparate werden daher rein präventiv eingesetzt.

Aufgabe der Erfindung ist es daher, ein biologisches Mittel zur Prophylaxe und/oder Bekämpfung eines Pflanzenschädlings anzugeben. Es ist weiters eine Teilaufgabe der Erfindung, den Ausbruch von Feuerbrand, verursacht durch Erwinia amylovora, zu verhindern bzw. den Verursacher zu bekämpfen.

Die Aufgabe der Erfindung wird durch ein Verfahren zur Herstellung eines Mittels zur Prophylaxe und/oder Bekämpfung von zumindest einem Pflanzenschädling sowie durch das damit hergestellte Mittel jeweils eigenständig entsprechend den Merkmalen im Kennzeichenteil der Ansprüche 1 bzw. 13 gelöst. Der Vorteil dieser Erfindung liegt darin, daß für das Verfahren zur Herstellung des Mittels Komponenten biologischen Ursprungs verwendet werden. Die Verwendung von Komponenten biologischen Ursprungs erweist sich als vorteilhaft, da während der Herstellung und Verwendung biologischer Mittel allergische Reaktionen und Vergiftungen viel seltener als bei der Herstellung und Verwendung chemischer Stoffe, wie z.B. Antibiotika, Pestizide etc., auftreten bzw. sogar ausgeschlossen werden können. Weiters erweist es sich von Vorteil, daß durch die biologische Abbaubarkeit keine Rückstände auf den Pflanzen zurückbleiben und somit nicht in die Nahrungskette gelangen. Von Vorteil ist des weiteren, daß die Komponenten bzw. die Wirkstoffe aus den Komponenten bereits gelöst vorliegen und das Mittel somit direkt auf die befallenen Pflanzen aufgebracht werden kann.

Von Vorteil ist dabei die Weiterbildung nach Anspruch 2, wonach das Lösungsmittel biologisch abbaubar bzw. unbedenklich ist. Überdies steht in unseren Breiten Wasser, insbesondere Regenwasser, ausreichend und beinahe überall kostenlos zur Verfügung.

Vorteilhaft ist weiters die Ausgestaltung nach Anspruch 3, wonach ein Mittel für verschiedene Einsatzbedingungen hergestellt werden kann.

Von Vorteil ist dabei eine Weiterbildung des Verfahrens nach Anspruch 4, wobei zumindest eine weitere Komponente biologischen Ursprungs zugesetzt wird. Der Vorteil liegt darin, daß die Effizienz des Mittels zur Prophylaxe und/oder Bekämpfung von zumindest einem Pflanzenschädling erhöht werden kann.

Gemäß Anspruch 5 ist es weiters möglich, Tuberkulinum in einer Verdünnung von z.B. 1:10²⁰⁰ bzw. 1:10³⁰⁰ bzw. 1:10¹⁰⁰⁰ einzusetzen. Von Vorteil ist dabei, daß trotz dieser hohen Verdünnung die Effizienz des Mittels zur Prophylaxe und/oder Bekämpfung von zumindest einem Pflanzenschädling gesteigert werden kann.

Vorteilhaft ist weiters die Ausgestaltung nach Anspruch 6, wonach zumindest eine weitere Komponente den unterschiedlichen Einsatzbedingungen angepaßt werden kann.

Vorteilhafte Weiterbildungen des Verfahrens zur Herstellung eines Mittels zur Prophylaxe und/oder Bekämpfung von zumindest einem Pflanzenschädling sind in den Ansprüchen 7 bis 10 gekennzeichnet. Durch die moderaten Herstellungsbedingungen steht ein sehr schonendes Verfahren zur Herstellung des Mittels zur Verfügung. Die Komponenten biologischen Ursprungs werden keinen extremen Bedingungen, wie z.B. starken Temperaturschwankungen, hohem Druck etc., ausgesetzt und somit werden die Pflanzeninhaltsstoffe nicht zerstört.

Dabei erweist sich eine Ausgestaltung nach Anspruch 11 als vorteilhaft, wonach nach Abtrennung der Komponenten von der Lösung diese z.B. in Behälter mit einer sich nach oben hin verjüngenden Öffnung, wie Flaschen, Kanister, Beutel etc. abgefüllt werden kann. Ein weiterer Vorteil ist, daß durch die Elimination der Komponenten die Lösung mit Sprühflaschen bzw. mit Geräten mit einer Ansaugöffnung ausgebracht werden können, ohne die Öffnung bzw. die Leitungen dieser Geräte mit den Komponenten zu verlegen und/oder zu verstopfen.

Von Vorteil ist eine Weiterbildung des Verfahrens nach Anspruch 12, wobei durch die zumindest teilweise Abtrennung des Lösungsmittels eine Aufkonzentrierung der Lösung erreicht wird und dadurch z.B. ein geringerer Lagerungsaufwand erzielt wird. Eine zumindest teilweise Abtrennung des Lösungsmittels kann auch bei der Konzentrationsanpassung des Mittels an die Befallsstärke der Pflanze mit zumindest einem Schädling von Vorteil sein.

Vorteilhaft ist weiters die Ausgestaltung nach Anspruch 14, wonach das Mittel nicht direkt auf die Pflanze bzw. auf die erkrankte Stelle der Pflanze gebracht werden muß, sondern durch den Stoffwechsel der Pflanze an den Wirkungsort transportiert wird. Weiters erweist es sich als vorteilhaft, daß sich die Pflanze je nach Bedarf entsprechend dem Ausmaß der Befallsstärke das Mittel aus nicht erkrankten Stellen bzw. z.B. aus dem Boden holen kann.

Als vorteilhaft erweist sich eine Ausgestaltung nach Anspruch 15, wonach durch den Abbau des Mittels keine Umweltbelastung durch chemische Abbauprodukte entsteht.

Die Aufgabe der Erfindung wird eigenständig auch durch die Verwendung des Mittels entsprechend den Merkmalen im Kennzeichenteil des Anspruches 16 gelöst. Von Vorteil erweist sich, daß durch die Verwendung des Mittels eine Prophylaxe von Feuerbrand und/oder eine Bekämpfung der Feuerbrand verursachenden Bakterienspezies Erwinia amylovora möglich ist. Überraschender Weise hat sich gezeigt, daß das Mittel auch zur Prophylaxe und/oder Bekämpfung von zumindest einem weiteren Pflanzenschädling, ausgewählt aus einer Gruppe, umfassend Erannis defoliaria, Operophthera brumata, Sphaerotheca mors uvae, Oidium tuckeri, Uncinula necator, Erisyphe, Plasmopara viticola, Heteroptera, insbesondere Miridae, und Grapholitha funebrana verwendet werden kann.

Zum besseren Verständnis der Erfindung wird diese anhand der nachfolgenden Ausführungen bzw. Beispiele näher erläutert, wobei im folgenden Text alle Prozentangaben, außer im Zusammenhang mit der Beschreibung der Laborversuche, Gew.-% darstellen.

Zur Herstellung des biologischen Mittels können Blätter des Lebensbaumes Thuja occidentalis (Cupressaceae) in einer Menge, ausgewählt aus einem Bereich zwischen 2 % bis 15 %, beispielsweise 5 % bis 10 %, verwendet werden. Als vorteilhaft haben sich Mengen im Bereich zwischen 6 % bis 9 %, insbesondere zwischen 8,2 % bis 8,4 %, erwiesen. Wie bekannt ist, enthalten die Blätter des Lebensbaumes Thuja occidentalis als Inhaltsstoffe Thujon, Sesquiterpene, Occidentalol, Tropolone, Thujaplicin, Podophyllotoxin, Flavanoide und wasserlösliche Polysaccharide. Davon werden als Wirkstoffe des Mittels zur Prophylaxe und/oder Bekämpfung von zumindest einem Pflanzenschädling Sesquiterpene, Occidentalol und Podophyllotoxin vermutet.

Weiters wird die Rinde der nordamerikanischen Zitterpappel Populus tremuloides (Salicaceae) in einer Menge, ausgewählt aus einem Bereich zwischen 0,1 % bis 10 %, beispielsweise 1 % bis 8 %, verwendet. Als vorteilhaft haben sich Mengen im Bereich zwischen 4 % bis 5 %, insbesondere zwischen 4,4 % bis 4,5 %, erwiesen. Wie bekannt ist, enthält die Rinde der nordamerikanischen Zitterpappel Populus tremuloides als Inhaltsstoffe Phenolglykoside, Salicin, Salicylate, Acetylsalicylsäure, Populin, Caryophyllen und Gerbstoffe. Davon werden als Wirkstoffe des Mittels zur Prophylaxe und/oder Bekämpfung von zumindest einem Pflanzenschädling Phenolglykoside, Salicylate, Acetylsalicylsäure, Populin und Caryophyllen vermutet.

Die Blätter des Lebensbaumes Thuja occidentalis und die Rinde der nordamerikanischen Zitterpappel Populus tremuloides werden in den oben beschriebenen Mengen einem Lösungsmittel, wie z.B. Alkohol, und/oder Wasser, insbesondere chlorfreiem Wasser, vorzugsweise Regenwasser, wobei dieses den Rest auf 100 % bildet, zugesetzt.

Zur Effizienzsteigerung des Mittels zur Prophylaxe und/oder Bekämpfung von zumindest einem Pflanzenschädling kann die Knolle von echtem Safran Crocus sativus (Iridaceae) in einer Menge von 1 % bis 5 %, insbesondere 1,5 % bis 4 %, vorzugsweise 2 % bis 3 %, verwendet werden. Einen weiteren Bestandteil kann alternativ oder zusammen mit der Knolle von Crocus sativus eine Tuberkulinumlösung bilden.

Wie bekannt ist, enthält die Knolle des echten Safran Crocus sativus als Inhaltsstoffe Safranal, Phytosterine und Glykoside, wie Protocrocin, Crocin und Picrocrocin. Davon werden als Wirkstoffe des Mittels zur Prophylaxe und/oder Bekämpfung von zumindest einem Pflanzenschädling Glykoside, wie das Protocrocin, und Phytosterine vermutet.

Die Tuberkulinumlösung, eine Nosode, kann in einer Verdünnung von 1:10¹⁰⁰⁰ (Tuberkulinum D1000), vorzugsweise 1:10³⁰⁰ (Tuberkulinum D300), insbesondere von 1:10²⁰⁰ (Tuberkulinum D200), in einer Menge von 0,01 % bis 1 %, vorzugsweise 0,02 % bis 0,9 %, insbesondere 0,05 % bis 0,5 %, vorliegen. Nosoden sind homöopathische Präparate, die aus lebenden oder toten Organismen gewonnen werden. Nosoden werden z.B. aus Mikrokulturen, Viren, Sekreten, Seren oder Impfstoffen gewonnen. In Nosoden sind jedoch keine vermehrungsfähigen und lebenden Keime vorhanden. Tuberkulinum D200 bedeutet, daß eine Tuberkulinum Urtinktur in zweihundert aufeinanderfolgenden Schritten 1:10 verdünnt und potenziert wird. In der Homöopathie unterscheidet man zwischen Tiefpotenzen (D1 bis D12) und Hochpotenzen (D30 und höher). Die Tiefpotenzen wirken kürzer und werden daher öfter (mehrmals täglich) verabreicht. Hochpotenzen haben eine sehr langsame aber tiefgreifende Wirkung, sie reagieren auf klare Empfindungen chronischer Erkrankungen beim Menschen.

Dieses Lösungsmittel-Komponenten-Gemisch kann für einen Zeitraum, ausgewählt aus einem Bereich zwischen 1 Tag und 10 Tage, beispielsweise 3 Tage bis 8 Tage, vorzugsweise 5 Tage bis 7 Tage, stehen gelassen werden. Dies kann bei Raumtemperatur, d. h. zwischen 10 °C und 25 °C, und/oder lichtgeschützt und/oder bei zumindest annähernd 1,013 bar erfolgen. Nach Ablauf dieser Zeitperiode kann die Lösung von den Komponenten getrennt werden. Zur Trennung der Komponenten von der Lösung kann dekantiert werden und/oder eine fest/flüssig Trennvorrichtung wie z.B. ein Filter, ein Sieb etc., verwendet werden. Das Mittel kann für einen Zeitraum von 2 Monaten bis 7 Monaten, insbesondere 5 Monaten bis 4 Monaten, vorzugsweise 3 Monaten bis 2 Monaten, aufbewahrt werden. Um diese Haltbarkeit zu erzielen, ist keine Zugabe von Stabilisierungsreagenzien notwendig und somit können diese auch keine Rückstände auf den Pflanzen hinterlassen. Selbstverständlich kann aber bei Bedarf auch ein stabilisierend wirkendes Reagens verwendet werden.

Zur Aufkonzentrierung des Mittels kann zumindest ein Teil der Lösung durch z.B. Temperaturerhöhung, Druckerniedrigung etc. abgetrennt werden.

Die einzelnen Komponenten des Mittels können auch mittels z.B. Luft, Vakuum, Gefriertrocknung etc. getrocknet werden. Weiters können die Komponenten in den beschriebenen Mengenangaben vermengt und zerkleinert, insbesondere pulverisiert, werden. Die Wirkstoffe des Mittels können auch an eine Trägersubstanz körniger Struktur, z.B. Granulat, gebunden der Pflanze zugeführt werden. Als Trägersubstanz für das Mittel können verschiedene Stoffe, wie z.B. Ton, Kalk, silikatische Materialien etc., verwendet werden. Die Trägersubstanz mit dem Mittel kann beispielsweise bereits beim Einpflanzen der Pflanze in den Pflanzbereich vorgelegt werden oder auch nachträglich auf oder in den Boden neben der Pflanze gebracht werden.

Das Mittel kann direkt auf die zu schützenden bzw. erkrankten Pflanzen durch z.B. Gießen, Besprühen, Einstreichen etc. aufgebracht werden. Natürlich können die Komponenten auch in festem Zustand, vorzugsweise in pulverisierter Form, auf die Pflanzen, z.B. durch Aufstreuen, oder nach zumindest teilweiser Abtrennung des Lösungsmittels in komprimierter Form aufgebracht bzw. zugeführt werden. Durch den Pflanzenstoffwechsel wird das Mittel, welches sowohl im flüssigen als auch im festen Zustand auf oder neben die befallene Stelle der Pflanze der neben die Pflanze aufgebracht werden kann, zum Wirkungsort transportiert.

Das Mittel kann zur Prophylaxe und/oder Bekämpfung von zumindest einem Pflanzenschädling, ausgewählt aus einer Gruppe umfassend die Feuerbrand verursachende Bakterienspezies Erwinia amylovora, den großen und kleinen Frostspanner an Kirschbäumen (Erannis defoliaria, Operophthera brumata), den amerikanischen Stachelbeermehltau (Sphaerotheca mors uvae), echten und falschen Mehltau an Vergißmeinnicht (Oidium tuckeri, Plasmopara viticola), Wanzen (Heteroptera), insbesondere Blattwanzen an Rosen (Miridae) und der Pflaumenmade (Grapholitha funebrana) verwendet werden.

In den folgenden Beispielen wird die Erfindung näher erläutert. Selbstverständlich soll sie jedoch keinesfalls auf die darin genannten Einzelheiten beschränkt werden, sondern sind Abwandlungen davon, die der Fachmann aufgrund der Lehre dieser Ausführungen vornimmt, vom Schutzumfang mitumfaßt.

### Ausführungsbeispiel 1:

Es können 8,4 % der Blätter des Lebensbaumes Thuja occidentalis mit 4,2 % der Rinde der nordamerikanischen Zitterpappel Populus tremuloides vermengt werden. Der Rest, 87,4 %, kann von einem Lösungsmittel, vorzugsweise 20 % Ethanol und 80 % Wasser, gebildet werden. Das Lösungsmittel mit den Komponenten kann 5 Tage lang lichtgeschützt bei Raumtemperatur stehen gelassen werden. Nach Ablauf dieser Zeitperiode können die Komponenten von der Lösung abgetrennt werden und die Lösung kann bis zu 3 Monate aufbewahrt werden. In einem Laborversuch hat sich gezeigt, daß durch die einmalige Anwendung des Mittels, hergestellt nach diesem Ausführungsbeispiel, über 50 % der Pflanzen vor der Infektion mit Erwinia amylovora geschützt waren. Weiters konnte gezeigt werden, daß nach dreimaliger Anwendung bei infizierten Pflanzen Erwinia amylovora nach 1 Woche nur mehr in weniger als 50 % der Pflanzen nachgewiesen werden konnte. Dieses Mittel kann auch zur Prophylaxe und/oder Bekämpfung von Erannis defoliaria, Plasmopara viticola und Grapholitha funebrana verwendet werden.

### Ausführungsbeispiel 2:

Es können 8,5 % der Blätter des Lebensbaumes Thuja occidentalis und 3,3 % der Rinde der nordamerikanischen Zitterpappel Populus tremuloides vermengt werden. Des weiteren können 5,3 % der Knolle des echten Safran Crocus sativus und 0,7 % einer Tuberkulinumlösung in einer Verdünnung von 1:10³⁰⁰ beigemengt werden. Die restlichen 82,2 % können von einem Lösungsmittel, vorzugsweise 1 % Chloroform und 99 % Wasser, gebildet werden. Das Lösungsmittel mit den Komponenten kann zumindest 4 Tage bis 5 Tage lang lichtgeschützt bei Raumtemperatur stehen gelassen werden. Nach Ablauf dieser Zeitperiode können die Komponenten von der Lösung abgetrennt werden und die Lösung kann bis zu 4 Monate aufbewahrt werden. In einem Laborversuch hat sich gezeigt, daß durch die einmalige Anwendung des Mittels, hergestellt nach diesem Ausführungsbeispiel, über 70 % der Pflanzen vor der Infektion mit Erwinia amylovora geschützt waren. Weiters konnte gezeigt werden, daß nach dreimaliger Anwendung bei infizierten Pflanzen Erwinia amylovora nach 1 Woche nur mehr in weniger als 40 % der Pflanzen nachgewiesen werden konnte. Dieses Mittel kann auch zur Prophylaxe und/oder Bekämpfung von Operophthera brumata, Sphaerotheca mors uvae, Plasmopara viticola und Grapholitha funebrana verwendet werden.

### Ausführungsbeispiel 3:

Es können 8,5 % der Blätter des Lebensbaumes Thuja occidentalis und 2 % der Rinde der nordamerikanischen Zitterpappel Populus tremuloides vermengt werden. Des weiteren können 5,3 % der Knolle des echten Safran Crocus sativus beigemengt werden. Der Rest, 84,2 %, kann von einem Lösungsmittel, insbesondere 5 % Essigsäure und 95 % Wasser, gebildet werden. Das Lösungsmittel mit den Komponenten kann 5 Tage bis 6 Tage lang lichtgeschützt bei Raumtemperatur stehen gelassen werden. Nach Ablauf dieser Zeitperiode können die Komponenten von der Lösung abgetrennt werden und die Lösung kann bis zu 7 Monate aufbewahrt werden. In einem Laborversuch hat sich gezeigt, daß durch die einmalige Anwendung des Mittels, hergestellt nach diesem Ausführungsbeispiel, über 80 % der Pflanzen vor der Infektion mit Erwinia amylovora geschützt waren. Weiters konnte gezeigt werden, daß nach dreimaliger Anwendung bei infizierten Pflanzen Erwinia amylovora nach 1 Woche nur mehr in weniger als 30 % der Pflanzen nachgewiesen werden konnte. Dieses Mittel kann auch zur Prophylaxe und/oder Bekämpfung von Erannis defoliaria, Operophthera brumata, Sphaerotheca mors uvae, Plasmopara viticola, Heteroptera, insbesondere Miridae, und Grapholitha funebrana verwendet werden.

### Ausführungsbeispiel 4:

Es können 8,2 % der Blätter des Lebensbaumes Thuja occidentalis und 4,4 % der Rinde der nordamerikanischen Zitterpappel Populus tremuloides vermengt werden. Des weiteren können 3 % der Knolle des echten Safran Crocus sativus beigemengt werden. Die restlichen 84,4 % können von einem Lösungsmittel, insbesondere Regenwasser, gebildet werden. Das Lösungsmittel mit den Komponenten kann 5 Tage lang lichtgeschützt bei Raumtemperatur stehen gelassen werden. Nach Ablauf dieser Zeitperiode können die Komponenten von der Lösung mit einem Sieb abgetrennt werden und die Lösung kann bis zu 5 Monate aufbewahrt werden. In einem Laborversuch hat sich gezeigt, daß durch die einmalige Anwendung des Mittels, hergestellt nach diesem Ausführungsbeispiel, über 90 % der Pflanzen vor der Infektion mit Erwinia amylovora geschützt waren. Weiters konnte gezeigt werden, daß nach einmaliger Anwendung bei infizierten Pflanzen Erwinia amylovora nach 1 Woche nur mehr in weniger als 10 % der Pflanzen nachgewiesen werden konnte. In einigen Fällen konnte durch eine Behandlung mit dem Mittel sogar eine 100%ige Prophylaxe bzw. Bekämpfung der Infektion mit Erwinia amylovora beobachtet werden. Dieses Mittel kann auch zur Prophylaxe und/oder Bekämpfung von Erannis defoliaria, Operophthera brumata, Sphaerotheca mors uvae, Oidium tuckeri, Uncinula necator, Erisyphe, Plasmopara viticola, Heteroptera, insbesondere Miridae, und Grapholitha funebrana verwendet werden.

### Ausführungsbeispiel 5:

8,6 % des Lebensbaumes Thuja occidentalis und 4,3 % der Rinde der nordamerikanischen Zitterpappel Populus tremuloides können vermengt werden. Des weiteren können 0,4 % einer Tuberkulinumlösung in einer Verdünnung von 1:10¹⁰⁰⁰ zugefügt werden. Der Rest, 86,7 %, kann von einem Lösungsmittel, insbesondere 20 % Ethanol und 80 % Wasser, gebildet werden. Das Lösungsmittel mit den Komponenten kann 7 Tage lang lichtgeschützt bei Raumtemperatur stehen gelassen werden. Nach Ablauf dieser Zeitperiode können die Komponenten von der Lösung mit einem Sieb abgetrennt werden und die Lösung kann bis zu 6 Monate aufbewahrt werden. In einem Laborversuch hat sich gezeigt, daß durch die einmalige Anwendung des Mittels, hergestellt nach diesem Ausführungsbeispiel, über 80 % der Pflanzen vor der Infektion mit Erwinia amylovora geschützt waren. Weiters konnte gezeigt werden, daß nach zweimaliger Anwendung bei infizierten Pflanzen Erwinia amylovora nach 1 Woche nur mehr in weniger als 30 % der Pflanzen nachgewiesen werden konnte. Dieses Mittel kann auch zur Prophylaxe und/oder Bekämpfung von Oidium tuckeri, Uncinula necator, Erisyphe, Plasmopara viticola, Heteroptera, insbesondere Miridae, und Grapholitha funebrana verwendet werden.

### Ausführungsbeispiel 6:

8,4 % des Lebensbaumes Thuja occidentalis und 4,5 % der Rinde der nordamerikanischen Zitterpappel Populus tremuloides können vermengt werden. Des weiteren können 0,5 % einer Tuberkulinumlösung in einer Verdünnung von 1:10²⁰⁰ zugefügt werden. Die restlichen 86,6 % können von einem Lösungsmittel, insbesondere Wasser, z.B. Regenwasser, gebildet werden. Das Lösungsmittel mit den Komponenten kann 5 Tage lang lichtgeschützt bei Raumtemperatur stehen gelassen werden. Nach Ablauf dieser Zeitperiode können die Komponenten von der Lösung abgetrennt werden und die Lösung kann bis zu 5 Monate aufbewahrt werden. In einem Laborversuch hat sich gezeigt, daß durch die einmalige Anwendung des Mittels, hergestellt nach diesem Ausführungsbeispiel, über 90 % der Pflanzen vor der Infektion mit Erwinia amylovora geschützt waren. Weiters konnte gezeigt werden, daß nach einmaliger Anwendung bei infizierten Pflanzen Erwinia amylovora nach 1 Woche nur mehr in weniger als 10 % der Pflanzen nachgewiesen werden konnte. In einigen Fällen konnte durch eine Behandlung mit dem Mittel sogar eine 100%ige Prophylaxe bzw. Bekämpfung der Infektion mit Erwinia amylovora beobachtet werden. Dieses Mittel kann auch zur Prophylaxe und/oder Bekämpfung von Erannis defoliaria, Operophthera brumata, Sphaerotheca mors uvae, Oidium tuckeri, Uncinula necator, Erisyphe, Plasmopara viticola, Heteroptera, insbesondere Miridae, und Grapholitha funebrana verwendet werden.

## Patentansprüche

1. Verfahren zur Herstellung eines Mittels zur Prophylaxe und/oder Bekämpfung von zumindest einem Pflanzenschädling durch Zusammengeben mehrerer Komponenten, **dadurch gekennzeichnet, daß** das Mittel aus den Komponenten, jeweils in Gew.-%, 2 % bis 15 % der Blätter einer Thuja occidentalis (Cupressaceae) und 0,1 % bis 10 % der Rinde einer Populus tremuloides (Salicaceae) unter Zugabe eines Lösungsmittels, wobei dieses den Rest auf 100 Gew.-% bildet, hergestellt wird.

2. Verfahren nach Anspruch 1, **dadurch gekennzeichnet, daß** als Lösungsmittel Alkohol, z. B. Ethanol, und/oder Wasser, insbesondere chlorfreies Wasser, z. B. Regenwasser, und/oder Chloroform und/oder Essigsäure etc. verwendet wird.

3. Verfahren nach Anspruch 1 oder 2, **dadurch gekennzeichnet, daß** die Menge der Blätter von Thuja occidentalis, jeweils in Gew.-%, aus einem Bereich mit einer unteren Grenze von 2 %, insbesondere 5 %, vorzugsweise 8,2 %, und einer oberen Grenze von 15 %, insbesondere 10 %, vorzugsweise 8,4 % und/oder die Menge der Rinde von Populus tremuloides, jeweils in Gew.-%, aus einem Bereich mit einer unteren Grenze von 0,1 %, insbesondere 1 %, vorzugsweise 4,4 %, und einer oberen Grenze von 10 %, insbesondere 8 %, vorzugsweise 4,5 %, ausgewählt wird.

4. Verfahren nach einem der vorhergehenden Ansprüche, **dadurch gekennzeichnet, daß** als weitere Komponente(n), jeweils in Gew.-%, 1 % bis 5 % einer Knolle von Crocus sativus und/oder 0,01 % bis 1 % einer Tuberkulinumlösung zugesetzt wird (werden).

5. Verfahren nach einem der vorhergehenden Ansprüche, **dadurch gekennzeichnet, daß** die Tuberkulinumlösung in einer Verdünnung von 1:10¹⁰⁰⁰, vorzugsweise 1:10³⁰⁰, insbesondere von 1:10²⁰⁰, eingesetzt wird.

6. Verfahren nach einem der vorhergehenden Ansprüche, **dadurch gekennzeichnet, daß** die Menge, jeweils in Gew.-%, der Knolle von Crocus sativus aus einem Bereich mit einer unteren Grenze von 1 %, insbesondere 2 %, vorzugsweise 2,5 % und einer oberen Grenze von 5 %, insbesondere 4 %, vorzugsweise 3 %, und/oder die Menge der Tuberkulinumlösung aus einem Bereich mit einer unteren Grenze von 0,01 %, insbesondere 0,02 %, vorzugsweise 0,05 % und einer oberen Grenze von 1 %, insbesondere 0,9 %, vorzugsweise 0,5 % ausgewählt wird.

7. Verfahren nach einem der vorhergehenden Ansprüche, **dadurch gekennzeichnet, daß** die Komponenten untereinander vermischt in dem Lösungsmittel für einen Zeitraum, ausgewählt aus einem Bereich, mit einer unteren Grenze von 1 Tag, insbesondere 3 Tagen, vorzugsweise 4 Tagen, und einer oberen Grenze von 10 Tagen, insbesondere 7 Tagen, vorzugsweise 5 Tagen, stehengelassen werden.

8. Verfahren nach einem der vorhergehenden Ansprüche, **dadurch gekennzeichnet, daß** die Herstellung bei Raumtemperatur, d.h. zwischen 10 °C und 25 °C, erfolgt.

9. Verfahren nach einem der vorhergehenden Ansprüche, **dadurch gekennzeichnet, daß** die Herstellung bei zumindest annähernd 1,013 bar erfolgt.

10. Verfahren nach einem der vorhergehenden Ansprüche, **dadurch gekennzeichnet, daß** die Herstellung zumindest teilweise lichtgeschützt erfolgt.

11. Verfahren nach einem der vorhergehenden Ansprüche, **dadurch gekennzeichnet, daß** vom Lösungsmittel nicht gelöste Komponenten abgetrennt werden.

12. Verfahren nach einem der vorhergehenden Ansprüche, **dadurch gekennzeichnet, daß** das Lösungsmittel zumindest teilweise durch z.B. Temperaturerhöhung, Druckerniedrigung, etc. abgetrennt wird.

13. Mittel zur Prophylaxe und/oder Bekämpfung von zumindest einem Pflanzenschädling, **dadurch gekennzeichnet, daß** es durch ein Verfahren nach einem der Ansprüche 1 bis 12 herstellbar ist.

14. Mittel nach Anspruch 13, **dadurch gekennzeichnet, daß** die Komponenten zerkleinert, z. B. pulverisiert, und/oder komprimiert sind bzw. daß die Komponenten und/oder die daraus gebildete Lösung an eine Trägersubstanz, wie z.B. Granulat, beispielsweise aus Ton, Kalk, einem silikatischen Material etc., gebunden sind.

15. Mittel nach Anspruch 13 oder 14, **dadurch gekennzeichnet, daß** es biologisch abbaubar ist.

16. Verwendung des Mittels nach Anspruch 13 zur Prophylaxe und/oder Bekämpfung von zumindest einem Pflanzenschädling, der aus einer Gruppe, umfassend Erwinia amylovora, Erannis defoliaria, Operophthera brumata, Sphaerotheca mors uvae, Oidium tuckeri, Uncinula necator, Erisyphe, Plasmopara viticola, Heteroptera, insbesondere Miridae, und Grapholitha funebrana ausgewählt ist.
